# EUROPEAN PATENT SPECIFICATION

(11) **EP 3 464 419 B1**
(45) Date of publication and mention of the grant of the patent: **11.10.2023**
(21) Application number: 16902741.4
(22) Date of filing: 27.05.2016
(51) Int. Cl.: C08G 65/28, B01D 19/04, A01N 57/20, C08L 71/02, C08G 65/26, C08K 5/00

(54) **AGROCHEMICAL COMPOSITION COMPRISING A FOAM CONTROL AGENT AND PROCESS FOR PREPARING SAID AGROCHEMICAL FORMULATION**
AGROCHEMISCHE ZUSAMMENSETZUNG UMFASSEND EIN SCHAUMKONTROLLMITTEL UND VERFAHREN ZUR ZUBEREITUNG BESAGTER AGROCHEMISCHEN ZUSAMMENSETZUNG
COMPOSITION AGROCHIMIQUE COMPRENANT UN AGENT ANTI-MOUSSAGE ET PROCÉDÉ DE PRÉPARATION DE LADITE COMPOSITION AGROCHIMIQUE

(43) Date of publication of application: 10.04.2019
(73) Proprietor: Dow Global Technologies LLC, Midland, MI 48674 (US)
(72) Inventor: ZHONG, Ling, Shanghai 201213 (CN); MU, Jianhai, Shanghai 201213 (CN); HE, Meijia, Shanghai 201213 (CN)
(74) Representative: Beck Greener LLP
(86) International application number: PCT/CN2016/083752
(87) International publication number: WO 2017/201752

(56) References cited:
- EP-A1- 2 272 338
- WO-A1-2010/069898
- WO-A1-2015/023434
- WO-A1-2015/069509
- WO-A1-2015/139209
- WO-A1-2015/200029
- WO-A1-2016/018668
- WO-A1-2016/086349
- CN-A- 101 653 708
- US-A- 4 836 951
- US-A1- 2008 045 415
- US-A1- 2009 286 684
- US-A1- 2016 066 567

## Description

### FIELD

The present invention is related to a foam control agent and a composition containing the foam control agent, such as an agrochemical formulation.

### BACKGROUND

Pesticide active materials are formulated into either solid or concentrated liquid forms based on the physical and chemical properties of active ingredients. These formulations often need to be dispersed or diluted with water for spraying. A common problem in the dispersion and dilution process in which agitation is often involved is foaming. Foaming may result in difficulties in mixing and spraying, or even failure to achieve the desired dilution of the agrochemical. A low-foaming feature is very desirable for a pesticide formulation. Thus, minimizing the foaming of the pesticide formulation would be very beneficial in preparing an effective pesticide formulation.

Foam control agents are needed in most agrochemical formulations. Examples of known foam control agents include fatty acid, mineral oil and fatty alcohol, organosilicone, polyether and the like. Among the known foam control agents, organosilicone is often used both as "in-can" and "tank-mix" foam control agents to inhibit the development of foaming in agrochemical applications. Although it is well known that an organosilicone foam control agent has an acceptable efficiency for use in agrochemical formulations, it is also well-known that an organosilicone is very sensitive to formulation conditions (such as pH, temperature, solvent, and the like). For example, organosilicone tends to decompose and/or lose its defoaming effectiveness when used in a formulation having a pH of >7 or a pH of <5, and when used in combination with common polar solvents, such as methanol, dimethylformamide (DMF), N-methyl-2-pyrrolidone (NMP) and other solvents. In addition, an organosilicone foam control agent has problems with being soluble in both water and organic solvents. In some transparent formulation types, e.g. microemulsions (ME) and soluble liquids (SL), adding organosilicone foam to the formulation will result in a formulation that is turbid.

Moreover, the above-mentioned foam control agents have problems with being compatible in high electrolyte formulations such as formulations that contain pesticide active materials in their salt type form. Examples of such salt type pesticide active materials include glyphosate, paraquat, and glufosinate ammonium.

U.S. Patent No. 8,357,823 B2 discloses alkylene oxide capped secondary alcohol ethoxylates as fermentation foam control agents. The above patent discloses an EO/BO composition as a fermentation foam control agent in a fermentation process.

WO2015/023434 discloses adjuvants for agrochemical active formulations, the active formulation comprising a first adjubant comprising a fatty ester of a polyol or an oligomer thereof and a co-adjuvant comprising an alkoxylated fatty alcohol.

EP2272338 discloses agrochemical compositions comprising alkoxylation products of hydrocarbyl radicals comprising ethylene, propylene or butylene oxide groups or their mixtures terminated with a hydrogen or acyl group.

US2016/066567 discloses agrochemical formulations with a polyarganosiloxane defoamer containing polyoxyalkylene ether groups and tertiary aminoalkyl groups.

WO2016/086349, which is a European patent application falling within the terms of Article 54(3) of the European Patent Convention, discloses a defoaming adjuvant comprising a solid particulate carrier and a polyalkylene glycol adsorbed on to the solid particulate carrier, wherein the polyalkylene glycol is a reaction product of an alkyl alcohol initiator with 1, 2-butylene oxide and optionally propylene oxide.

US2008045415 discloses low foam preparations for crop protection comprising alkyl ether sulfates having 1 to 9 carbon atoms in the alkyl chain and 1 to 20 alkyleneoxy units in the ether moiety.

### SUMMARY

One embodiment of the present invention is directed to an agrochemical formulation comprising a polyether foam control agent containing butylene oxide (BO) units useful for agro formulation applications. The polyether foam control agent includes a mixture of polyethylene oxide (PO) units and BO units resulting in a polyether compound with PO/BO units.

The water-based agrochemical formulation includes a combination of: (a) the polyether foam control agent described above; (b) at least one pesticide active: and (c) water.

Other embodiments of the present invention include a process for preparing the water-based agrochemical formulation containing the polyether foam control agent.

The BO group-containing polyether of the present invention exhibits an effective foam control property/effect when used in a water-based agrochemical formulation. In addition, the BO group-containing polyether foam control agent of the present invention has good compatibility to strong electrolytes present in the water-based agrochemical formulation. During thermal storage, for example at room temperature or at a temperature 54 °C or more, the foam control agent of the present invention can maintain its foam control effectiveness.

### DETAILED DESCRIPTION

An "agrochemical formulation" herein means a pesticide formulation comprising at least one active ingredient and one or more other additives. The pesticide agrochemical formulation can be used, for example, to control grass, kill insects, and eliminate bacteria for crop protection applications.

"Low foaming" with reference to a foam control agent herein means a level of foaming performance that meets the required level established by the Food and Agriculture Organization (FAO) of the United Nations or better. The foam level of a formulation can be reduced by a certain percentage using the defoaming agent of the present invention, for example the foam level of a formulation can be reduced to less than 90 percent (%) in one embodiment, and to less than 50 % in another embodiment, of the initial foam level value as measured by a "persistent foam volume" measurement method described in the Example section herein.

"Compatibility" herein means, with reference to a formulation that is formed by mixing formulation ingredients together, a measure of how stable an ingredient is when mixed with another ingredient, for example an ingredient's solubility in aqueous or solvent-based systems. If ingredients mix and do not change, the ingredients are considered compatible. If ingredients mix and change or do not mix at all, the ingredients are considered incompatible. Thus, the formulation herein is compatible when the formulation does not undergo an undesirable change in appearance after mixing the ingredients such as for example the formulation does not result in cloudiness, precipitation, flocculation, turbidity, or other visual quality issue as observed by the naked eye.

A "strong electrolyte" herein means, with reference to a formulation, the concentration of the electrolyte in solution is from about 0.1 weight percent (wt %) to about 40 wt % in one embodiment, and from about 20 wt % to about 30 wt % in another embodiment.

"Thermal storage" herein means storage at a temperature higher than room temperature (about 23 °C) such as for example a typical thermal test temperature of 54 °C or more.

"Defoaming efficiency ratio" herein means the ratio of foam volume of a formulation containing a foam control agent to foam volume of a formulation without a foam control agent (i.e., a blank test sample).

In general, the present invention is directed to providing an agrochemical formulation comprising at least one polyether foam control agent comprising a polyalkylene glycol (PAG) copolymer with BO units in the chemical structure of the PAG copolymer. More specifically, a polyether containing BO units is prepared to form a polyether foam control agent. The BO-containing polyether of the present invention useful as a foam control agent (also interchangeably referred to as a "defoamer" or "defoaming agent") can be described by the following chemical formula designated as Structure (I):

R₁[O-(AO)ₐ-(BO)_{b}-R₂]_{c} Structure (I)

wherein R₁ is an alkyl backbone remnant from an alkyl alcohol initiator; AO is a propylene oxide remnant, after copolymerization; BO is a 1,2-butylene oxide remnant after polymerization; R₂ is either a hydrogen or a capping group, said capping group being an alkyl, C(O)R or benzyl group; and a and b are the number of AO and BO units in the PAG copolymer on average. The value for a is an average number of from zero to 30 while the value for b is an average number of greater than zero to 30. The value for c is a number selected from 1, 2 or 3 and corresponds to the number of hydroxyl groups on the alcohol initiator. The ratio of propylene oxide to butylene oxide is 1:1 based on weight. The formulation additionally comprises at least one pesticide active and water.

In one embodiment, BO in the BO-containing polyether as described in Structure (I) can be desirably present at a concentration of greater than (>) about 20 wt %, and > about 40 wt % in another embodiment. The molecular weight of the BO-containing polyether foam control agent may be from about 300 to about 2,000 in one general embodiment.

AO in the above Structure (I) is propylene oxide. Thus, the BO-containing polyether foam control agent of the present invention can be formed containing a mixture of oxide units including for example a mixture of propylene oxide (PO) units and butylene oxide (BO) units; and can be described by the following chemical formula designated as Structure (II):

R₁[O-(PO)ₐ-(BO)_{b}-R₂]_{c} Structure (II)

wherein R₁, R₂, a, b, and c can be the same as described with reference to Structure (I).

The polyether foam control agent product of the present invention may include commercially available products for example the products under the tradename UCON^{™} OSP available from The Dow Chemical Company. In some preferred embodiments, the polyether foam control agent product of the present invention may include commercially available products such as UCON^{™} OSP-18, UCON^{™} OSP-32, UCON^{™} OSP-46 and UCON^{™} OSP-68 available from The Dow Chemical Company.

The polyether foam control agent is added to various pesticide formulations. For example, the polyether foam control agent can be added to a water-based pesticide formulation, such as a soluble liquid (SL) or a microemulsion (ME).

The polyether foam control agent can be mixed with various activators and inert adjuvants, including for example nonionic emulsifiers, anionic emulsifiers, wetting agents, dispersants, and mixtures thereof. The polyether foam control agent can also be mixed with other types of foam control agents, including for example, silica particles, organosilicone, fatty acid and mixtures thereof.

The "end cap" for the PAG is the R² group combined with the oxygen of the alkoxy group to which it attaches. For example, when R² is a hydrogen, the PAG is deemed to have a hydroxyl (-OH) end cap. When R² is an alkyl, the PAG has an ether (-OR²) end cap; and when R² is C(O)R, the PAG has an ester (-OC(O)R) end cap.

The alkyl alcohol initiator corresponds to the structure R¹[OH]_{c} where R¹ is the same in the alcohol and PAG structures described above; and c is the same value as c in the PAG structure above. The alkyl alcohol initiator, and therefore R¹, can contain one carbon or more in one embodiment; 1 carbon to about 30 carbons in another embodiment; 6 carbons to about 20 carbons in still another embodiment; 6 carbons to about 12 carbons in yet another embodiment; and 30 carbons or less in even still another embodiment. Some desirable alkyl alcohol initiators (and R¹ groups) contains 6 or more, 8 or more carbons, 10 or more carbons, 12 or more carbons, 14 or more carbons 16 or more carbons, 18 or more carbons, even 20 or more carbons on average over all PAG molecules. The PAG can comprise a combination of PAG molecules, each having R¹ carbon lengths within the scope of these suitable values. R¹ can be linear or branched alkyl where "linear" means that each carbon has only one or two carbons attached to the each carbon; and "branched" means at least one carbon has at least three carbons attached to the at least one carbon. Examples of suitable alkyl alcohol initiators include those selected from dodecanol, 1,2-propylene glycol, and mixtures thereof.

According to the invention, the BO containing polyether foam control agent of the is used in a pesticide formulation. In general, the amount of the polyether in the pesticide formulation can be in the range of from about 0.05 wt % to about 5 wt % in one embodiment and from about 0.1 wt % to about 2 wt % in another embodiment.

In general, the process for preparing the BO-containing compound of the present invention includes mixing and reacting the following compounds in a reactor: an initiator, a catalyst and a defoaming agent comprising a blend of oxides such as butylene oxide and another different alkylene oxide such as propylene oxide to form a polymer product. For example, in one preferred embodiment, the process of preparing the BO-containing compound of the present invention includes the steps of: loading an initiator into a reactor vessel followed by adding a catalyst to the reactor; and then, heating the mixture. Thereafter, a mixture of an alkylene oxide such as propylene oxide and 1,2-butylene oxide, (in equal weight ratios), is fed into the reactor and the resultant mixture is allowed to react to form a polymer. After the reaction, any residual catalyst may be removed by filtration, centrifugation or other removal means.

In other embodiments, polymers of different molecular weights can be synthesized by adjusting the ratio of initiator to oxide feed. Some of the polymer foam control agent products produced by the process above can have typical molecular weights of from about 300 g/mol to about 2,000 g/mol.

The BO group-containing polyether of the present invention advantageously is effective as a foam control agent when used in a water-based agrochemical formulation. Generally, the foam control property performance or effect (also referred to as the high efficiency property) of the BO group-containing polyether can be between about 40 % and about 99 % in one embodiment, between about 60 % and about 95 % in another embodiment, and between about 80 % and about
95 % in still another embodiment (the percentages above represent the defoaming efficiency ratio). The foam control property performance of the BO group-containing polyether may be measured by the test of "persistent foam volume" which is carried out according to the procedure described in GB/T 28137-2011 and used in the Examples herein which follows. Briefly, the percentages above mean defoaming efficiency rate. The defoaming efficiency rate is calculated as follows: (1) the foam volume with defoamer is divided by blank foam volume, and (2) 100 % - the value from step (1) above.

In addition, the foam control agent of the present invention is soluble in both water and organic solvents. Moreover, the BO group-containing polyether foam control agent of the present invention is compatible to strong electrolytes present in the water-based agrochemical formulation such as formulations that contain pesticide active materials in the materials' salt type form.

The compatibility here means solubility in aqueous or solvent-based systems. It is mentioned because traditional silicone defoamer is not soluble both in water and solvent. In water, the solubility of a BO containing PAG defoamer is generally up to about 1 % depending on the chemical structure of the defoamer. In solvent, the BO containing PAG defoamer may be soluble in many solvents, for example, cyclohexanone, polyether, NMP, xylene, toluene and the like; and the solubility can be up to at least about 5 % to about 10 %.

The beneficial property of compatibility (or solubility) exhibited by the BO group-containing polyether may be up to about 30 % in one embodiment, and from about 1 % to about 30 % in another embodiment. As one illustration of the present invention, the defoamer has good solubility in an aqueous solution, for example a 30 % glyphosate salt aqueous solution, at a dosage of up to about 5 wt % in one embodiment, up to 2 wt % in another embodiment and up to about
1 wt % in still another embodiment. Above the 5 wt % concentration, the water solution may turn cloudy; and in some systems even above the 1 wt % concentration can turn the solution cloudy or turbid.

As another illustration of the present invention, the defoamer has good solubility in solvent or solvent/water systems. For solvent or solvent/water systems, the dosage of the defoamer can be, for example, up to about 30 wt % in one embodiment, from 1 wt % to about 30 wt % in another embodiment, and from 1 wt % to about 20 wt % in still another embodiment because the defoamer has better solubility in a solvent. The defoamer has high solubility up to a dosage of about 30 wt % in a solvent-containing system. However, the defoamer dosage may be less than 30 wt %, for example up to 2 wt % because the defoamer has a high defoaming efficiency.

Another beneficial property of the BO group-containing polyether of the present invention is its stability. During thermal storage at a temperature of 54 °C, the foam control agent of the present invention is stable and can maintain its foam control effectiveness. The stability property of the BO group-containing polyether may be in the range of from about 90 % to about
100 % in one embodiment, from about 95 % to about 100 % in another embodiment, and from about 99 % to about 100 % in still another embodiment. The stability property (or the "lasting defoaming property") of the BO group-containing polyether can be determined using the procedure described herein below in the Examples. For instance, the stability ratio herein may be calculated by the defoaming efficiency % after thermal test divided by the original defoaming %.

Other beneficial properties of the BO group-containing polyether of the present invention include for example, (1) the polyether foam control agent of the present invention is not very sensitive to formulations conditions (such as pH, temperature, solvent and the like); and (2) the polyether foam control agent of the present invention does not decompose or lose its de-foaming effectiveness. For example, the defoamer of the present invention is stable in a relatively broad pH, temperature and solvent range, compared to a silicone defoamer of the prior art. For instance, silicone is stable in a solution having a pH of 6-7. In contrast, there is no specific pH requirement for use of the defoamer of the present invention. Also, there is no storage temperature requirement for the defoamer of the present invention. In addition, the defoamer of the present invention does not decompose and/or lose its defoaming effectiveness when used in combination with common polar solvents, such as methanol. And, with the use of the foam control agent of the present invention, there is no need to use "in-can" and "tank-mix" foam control agents to inhibit the development of foaming in agrochemical applications.

One broad embodiment of the present invention includes a water-based agrochemical formulation including a combination of: (a) the polyether foam control agent of the present invention described above; (b) at least one pesticide active: and (c) at least water.

In preparing the water-based agrochemical formulation of the present invention, a first required component (a) is the polyether foam control agent described above; and as illustrated in Structures (I) - (III). Examples of component (a) are described above; and as aforementioned, in one preferred embodiment, the polyether foam control agent can be a BO group-containing polyether.

The concentration of the polyether foam control agent, component (a), in the water-based agrochemical formulation of the present invention ranges from about 0.001 wt % to about 5 wt % in one embodiment, from about 0.01 wt % to about 2 wt % in another embodiment, and from about 0.1 wt % to about 1 wt % in still another embodiment, based on the total weight of the components in the agrochemical formulation.

The foam control agent, component (a), provides the agrochemical formulation with several benefits including for example the following benefits: (1) the foam control agent controls foaming up to about 99 %; (2) the foam control agent maintains defoaming efficiency during long term storage at room temperature and at thermal storage; and (3) the foam control agent does not influence or adversely affect the appearance and transparency of the formulation.

The at least one pesticide active, component (b), of the present invention can be any conventional pesticide active. For instance, general examples of component (b) may include one or more of herbicides, insecticides, fungicides and the like that can be made into SL formulations, ME formulations, and the like formulations. Examples of active ingredients are glyphosate (and its salts), paraquat, glufosinate, fluoroglycofen, oxyfluorfen, cyhalofop-butyl, fosthiazate, haloxyfop-R-methyl, indoxacarb, emamectin benzoate, abamectin, imidacloprid, fipronil, beta cypermethrin, acetamiprid, propiconazole, tricyclazole difenoconazole, prochloraz, tebuconazole, hexaconazole, tubatoxin, and the like; and mixtures thereof.

The concentration of the active depends on the drug efficacy of the active itself. For example, for some actives, the concentration of the actives may only be at a very low level because high concentrations of such actives may result in phytotoxicity. On the other hand, for some actives, a high concentration may be used when such burning of crops does not occur at high concentrations of active. Also, the concentration of the active may be restricted by the formulation recipe in which the active is added. For instance, for a ME formulation, the active ingredient may be used at a concentration of up to about 50 wt %.

In one unclaimed embodiment, the concentration of the pesticide active, component (b), of the present invention may range generally from about 0.5 wt % to about 80 wt %, from about 1 wt % to about 60 wt % in another unclaimed embodiment, and, according to the invention, from about 2 wt % to about 40 wt %, based on the total weight of the components in the agrochemical formulation.

The pesticide active, component (b), provides the agrochemical formulation with several beneficial properties such as for example the capability to control grass, kill insects and/or control bacteria.

Water, component (c), is a diluent used in the agrochemical formulation. Any type of water can be used in the agrochemical formulation of the present invention including tap water, distilled water, dionized water and the like.

The concentration of the water, component (c), added to the agrochemical formulation is sufficient to may make up the difference in total content (up to 100 %) of the components of the agrochemical formulation. For example, the water can range generally from about 1 wt % to about 95 wt % in one embodiment, from about 10 wt % to about 90 wt % in another embodiment, and from about 20 wt % to about 70 wt % in still another embodiment, based on the total weight of the components in the agrochemical formulation.

The agrochemical formulation of the present invention may also include other optional components or additives including for example one or more of solvents, pH adjusting agents, anti-freezing agents, activators, thickeners, emulsifiers, microbiological control agents, and mixtures thereof. The optional additive, component (d), may be added to the agrochemical formulation in the appropriate concentration to provide the agrochemical formulation with the additive's intended function or property. For example, a solvent is usually added in a ME or a SL formulation to further dissolve the solids in the formulation and to diluent the formulation.

The concentration of the optional additives added to the agrochemical formulation of the present invention may range generally from 0 wt % to about 50 wt % in one embodiment, from about 5 wt % to about 50 wt % in another embodiment, and from about 10 wt % to about 40 wt % in still another embodiment, based on the total weight of the components in the agrochemical formulation.

In a broad embodiment, the process of preparing the agrochemical formulation of the present invention includes blending or mixing the above components (a) to (d) together to form the agrochemical formulation.

The process and type of equipment used to prepare the agrochemical formulation of the present invention includes blending or mixing of the above components in conventional mixing equipment or vessels known in the art. For example, the preparation of the agrochemical formulation of the present invention is achieved by blending, in known mixing equipment, components (a) - (c) and optionally (d) any other desirable additives. The preparation of the agrochemical formulation of the present invention, and/or any of the steps thereof, may be a batch or a continuous process.

All the above compounds of the agrochemical formulation are typically mixed and dispersed in a vessel at a temperature enabling the preparation of an effective agrochemical formulation. Typically, the components are mixed at room temperature (about 25 °C). In an embodiment where the active ingredient(s) is solid, the solid component can be dissolved in water or solvent at a warmer temperature other than room temperature. For example, the mixture may be warmed at a temperature of from about 40 °C to about 50 °C to speed up the dissolution process. Any other process conditions known in the art can be used in preparing the mixture.

In one preferred embodiment, the process of preparing a SL or ME agrochemical formulation of the present invention includes, for example, the following steps:
Step (1): If solvent is needed, the active ingredient may be firstly dissolved in a solvent under stirring at room temperature until complete dissolution of the ingredient is obtained to form a transparent solution.
Step (2): Component (a) and oil soluble component (d) are mixed with component (b) until complete dissolution is obtained to form a transparent solution.
Step (3): Any water soluble component (d) used in the agrochemical formulation is dissolved in a water phase.
Step (4): Under stirring or homogenizing, e.g. at a range of from about 300 rpm to about 3,000 rpm, component (c) water is added to the mixture obtained above. The resulting mixture is stirred for another 10 min after mixing. Thereafter, a uniform clear solution is generated.

The agrochemical formulation that is prepared by the above process of the present invention exhibits several unexpected and unique properties; and several of the improvements of the BO group-containing polyether foam control agent are imparted to the agrochemical formulation. For example, some of the important properties of the agrochemical formulation containing the BO group-containing polyether foam control agent can include: (1) the agrochemical formulation can have up to 99 % foaming control property compared to a blank formulation without the BO group-containing foam control agent, (2) the agrochemical formulation can have a lasting foam control effect during storage, (3) the agrochemical formulation can have no deleterious effect on foam control performance by pH, solvent or temperature; and (4) the foam control agent, present in the agrochemical formulation, does not influence or adversely affect the appearance and transparency of the agrochemical formulation.

Generally, the foam control efficiency performance property of the agrochemical formulation can be between about 40 % and about 99 % in one embodiment, between about 60 % and about 95 % in another embodiment, and between about 80 % and about 95 % in still another embodiment. The foam control performance property of the agrochemical formulation may be measured by the procedure described in GB/T 28137-2011.

Another beneficial property of the agrochemical formulation of the present invention is its lasting foam control effect during thermal storage, e. g. 54 °C. The foam control efficiency during thermal storage property of the agrochemical formulation may be in the range of from about 90 % to about 100 % in one embodiment, from about 95 % to about 100 % in another embodiment, and from about 99 % to about 100 % in still another embodiment. The foam control effect property of the agrochemical formulation can be determined using the procedure as described in GB/T 28137-2011.

Because of the beneficial properties exhibited by the BO group-containing polyether foam control agent and the agrochemical formulation, the agrochemical formulation of the present invention is advantageously used in agrochemical applications including for example herbicides, insecticides, fungicides, and the like.

### EXAMPLES

The following Examples and Comparative Examples further illustrate the present invention in more detail but are not to be construed to limit the scope thereof.

In the following Examples and Comparative Examples, various terms and designations were used and are explained as follows:
"SL" stands for soluble liquid.
"ME" stands for microemulsion.
UCON^{™} OSP-18, UCON^{™} OSP-32, UCON^{™} OSP-46, and UCON^{™} OSP-68 are various product grades for UCON^{™} OSP products commercially available from The Dow Chemical Company.

### General Procedure for the Preparation of SL Formulation

In a SL formulation, active ingredients are completely dissolved in either (i) water miscible polar solvents or (ii) water. Thus, the preparation process for preparing a SL formulation is very simple: mix the active ingredient with surfactants, water or solvent under stirring. The surfactants in SL are mainly for application purpose to lower surface tension and improve spreading performance.

### General Procedure for the Preparation of ME Formulation

A ME usually comprises of active ingredient, solvent, co-solvent, emulsifier and water. Active ingredient is firstly dissolved in solvents to form a uniform oil phase. Heating may be used to speed up the dissolution process. Then a certain amount of emulsifiers and water are mixed with the oil phase under stirring. Since a ME is a thermodynamic stable system, it has been found that the preparation process of the ME has very little influence on formulation appearance and performance.

The components used in preparing the SL and ME formulations are listed in Table I:

**Table I**

| Component | Component Description | Supplier |
|---|---|---|
| glyphosate | N-(phosphonomethyl)glycine | Wynca |
| haloxyfop-R-methyl | (*R*)-2-[4-(3-chloro-5-trifluoromethyl-2-pyridyloxy)phenoxy]propionic acid | Sanlen |
| fosthiazate | (*RS*)-*S*-sec-butyl-*O*-ethyl-2-oxo-1,3-thiazolodin-3-ylphosphonothioate | Sanlen |
| TRITON^{™} CG-110 | alkyl polyglycoside | The Dow Chemical Company |
| cyclohexanone | cyclohexanone | Sinopharm Chemical Reagent |
| Butyl CARBITOL^{™} | diethylene glycol n-Butyl Ether | The Dow Chemical Company |
| ECOSURF^{™} EH-3 | iso-octanol alkoxylates | The Dow Chemical Company |
| DOWFAX^{™} D-800 | EO / PO polyethers | The Dow Chemical Company |
| TRITON^{™} GR-7M | alkyl sodium sulfosuccinate | The Dow Chemical Company |
| DOWFAX^{™} 2A1 | disodium branched dodecyl diphenoloxide disulfonate | The Dow Chemical Company |
| ECOSURF^{™} EH-14 | iso-octanol alkoxylates | The Dow Chemical Company |

### General Method of Preparing Standard Hard Water

The method of preparing standard hard water includes dissolving anhydrous calcium chloride (0.304 grams (g)) and magnesium chloride hexahydrate (0.139 g) in deionized (DI) water and then diluting the mixture to scale in a 1,000 milliliter (mL) volumetric flask.

In the Examples and Comparative Examples, the following standard measurements, analytical equipment, and test methods are used:

### Persistent Foam Volume Test Measurements

The test of "persistent foam volume" is carried out according to the procedure described in GB/T 28137-2011 which can be summarized in the following general steps:
Step (1): Weigh about 180 g standard water (342 part per million (ppm)) into a 250 mL graduated cylinder with a glass stopple. The distance between the 0 mark and the 250 mark of the cylinder is 20-21.5 centimeters (cm), and the distance between 250 mL mark of the cylinder and the bottom of the stopple is 4~6 cm.
Step (2): Add 1.0 g of the pesticide formulation sample into the water.
Step (3): Add standard water (342 ppm) into the cylinder until the distance between the surface of the solution in the cylinder and the bottom of the stopple is 9 cm.
Step (4): Place a stopple on the cylinder to seal the cylinder; and invert the cylinder 30 times within 1 minute (min) (which is about 2 seconds (s) for one complete inversion cycle).
Step (5): After step (4), place the cylinder upright on a laboratory bench and immediately start a stopwatch to measure the time foaming begins. Read and record the foam volume after 1 min.

Several liquid polyethers defoamer products can be used to lower the foam volume of various solutions. All the polyether defoamer products listed in Table II are commercially available from The Dow Chemical Company. The chemical description of each of the polyethers is also described in the Table II.

**Table II**

| Polyether | Chemical Description |
|---|---|
| DOWFAX^{™} 25A414 | alkyl alcohol EO/PO copolymer |
| DOWFAX^{™} 141 | n-butanol EO/PO reversed copolymer |
| DOWFAX^{™} 103 | glycerin EO/PO reverse copolymer |
| POLYGLYCOL P 1000E | polypropylene glycol |
| POLYGLYCOL P 2000E | polypropylene glycol |
| POLYGLYCOL P 4000E | polypropylene glycol |
| UCON^{™} OSP-18 | C12 POBO random copolymer |
| UCON^{™} OSP-68 | C12 POBO random copolymer |

### Examples 1 - 2 and Comparative Examples A - G

In these Examples, formulations were prepared by mixing the components or ingredients described in Table III. The glyphosate IPA active ingredient was firstly prepared by neutralizing glyphosate with isopropanol amine (IPA) to form glyphosate IPA. Then the ingredients: glyphosate IPA active ingredient, surfactant, foam control agent and water were mixed under mechanical agitation to prepare a SL formulation. The concentration of glyphosate IPA is calculated based on glyphosate acid weight.

### Foam Control Performance in 30 wt % Glyphosate SL

The Examples described in Table III were tested using the persistent foam volume method which was carried out according to the procedure described in GB/T 28137-2011. The foam volume in a blank test (Comparative Example A) is 65 mL.

**Table III**

| Component | Comparative Example A (Blank - no defoamer) | Example 1 | Example 2 | Comparative Example B | Comparative Example C | Comparative Example D | Comparative Example E | Comparative Example F | Comparative Example G |
|---|---|---|---|---|---|---|---|---|---|
| glyphosate IPA (wt % based on glyphosate) | 30 wt % | 30 wt % | 30 wt % | 30 wt % | 30 wt % | 30 wt % | 30 wt % | 30 wt % | 30 wt % |
| TRITON^{™} CG-110 | 10 wt % | 10 wt % | 10 wt % | 10 wt % | 10 wt % | 10 wt % | 10 wt % | 10 wt % | 10 wt % |
| UCON^{™} OSP-18 | | 0.2 wt % | 0.5 wt % | | | | | | |
| POLYGLYCOL P-4000 | | | | 0.2 wt % | | | | | |
| POLYGLYCOL P-2000 | | | | | 0.2 wt % | 0.3 wt % | | | |
| DOWFAX^{™} DF-103 | | | | | | | 0.2 wt % | | |
| DOWFAX^{™} 25A414 | | | | | | | | 0.2 wt % | |
| DOWFAX^{™} DF141 | | | | | | | | | 0.2 wt % |
| water | to 100 % | to 100 % | to 100 % | to 100 % | to 100 % | to 100 % | to 100 % | to 100 % | to 100 % |
| Foam volume, ml | 65 | 10 | 3 | Turbid | 20 | Turbid | 25 | 35 | 35 |

As shown by the results in Table III, all the polyether foam control agents at 0.2 wt % dosage helped in lowering the foam volume of the formulations tested. However, POBO-based UCON^{™} OSP-18 foam control agent (Example 1) showed the best defoaming effectiveness compared to either a PO-based foam control agent (Comparative Examples B and C) and a EO/PO-based foam control agent (Examples D and F). Moreover, the POBO-based UCON^{™} OSP-18 foam control agent (Example 2) at 0.5 wt % dosage has an increased compatibility and maintains the formulation as a clear liquid in appearance. In contrast, a POLYGLYCOL P-4000 foam control agent (Comparative Example B) causes turbidity at a dosage of 0.2 wt %, and the POLYGLYCOL P-2000 foam control agent (Comparative Example D) was insoluble at 0.3 % dosage.

### Examples 3 and 4 and Comparative Examples H - K

In these Examples, formulations were prepared by mixing the components or ingredients described in Table IV. The haloxyfop-R-methyl active ingredient of Table IV was firstly dissolved in solvents to form a uniform oil phase. Heating may be applied to the haloxyfop-R-methyl and the solvent mixture to speed up the dissolution process. Then, an amount of emulsifiers, foam control agent and water as described in the Examples of Table IV were added to the oil phase. And, the final product was formed under stirring of the ingredients mixed in the oil phase.

### Foam Control Performance in ME

The Examples described in Table IV were tested using the persistent foam volume method which was carried out according to the procedure described in GB/T 28137-2011. The foam volume in a blank test (Comparative Example H) is 65 mL.

**Table IV**

| Component | Comparative Example H (Blank - no defoamer) | Example 3 | Example 4 | Comparative Example I | Comparative Example J | Comparative Example K |
|---|---|---|---|---|---|---|
| haloxyfop-R-methyl | 17 wt % | 17 wt % | 17 wt % | 17 wt % | 17 wt % | 17 wt % |
| cyclohexanone | 10 wt % | 10 wt % | 10 wt % | 10 wt % | 10 wt % | 10 wt % |
| Butyl CARBITOL^{™} | 15 wt % | 15 wt % | 15 wt % | 15 wt % | 15 wt % | 15 wt % |
| ECOSURF^{™} EH-3 | 8 wt % | 8 wt % | 8 wt % | 8 wt % | 8 wt % | 8 wt % |
| DOWFAX^{™} D-800 | 8 wt % | 8 wt % | 8 wt % | 8 wt % | 8 wt % | 8 wt % |
| TRITON^{™} GR-7M | 5 wt % | 5 wt % | 5 wt % | 5 wt % | 5 wt % | 5 wt % |
| UCON^{™} OSP-18 | | 2 wt % | | | | |
| UCON^{™} OSP-68 | | | 2 wt % | | | |
| POLYGLYCOL P-2000 | | | | 2 wt % | | |
| DOWFAX^{™} DF-103 | | | | | 2 wt % | |
| DOWFAX^{™} 25A414 | | | | | | 2 wt % |
| water | to 100 % | to 100 % | to 100 % | to 100 % | to 100 % | to 100 % |
| Foam volume, ml | 65 | 10 | 15 | 30 | 30 | 35 |

As shown by the results in Table IV, the experimental results of the foaming tests performed in the above ME formulations indicate that the POBO-based UCON^{™} OSP-18 and UCON^{™} OSP-68 foam control agent (Examples 3 and 4, respectively) exhibited high foam control effectiveness compared with the PO-based polyether foam control agent (Comparative Example I) and the EO/PO-based polyether foam control agent (Comparative Examples J and K).

### Example 5 and Comparative Examples L - O

In these Examples, formulations were prepared by mixing the components or ingredients described in Table V. The formulations of the Examples were obtained by mixing the ingredients: fosthiazate, butyl CARBITOL^{™} solvent, DOWFAX^{™} 2A1 and ECOSURF^{™} EH-14 surfactants under agitation until a clear solution was generated.

### Foam Control Performance in ME

The Examples described in Table V were tested using the persistent foam volume method which was carried out according to the procedure described in GB/T 28137-2011. The foam volume in a blank test (Comparative Example L) is 65 mL.

**Table V - 5 wt % Fosthiazate ME**

| Component | Comparative Example L (Blank - no defoamer) | Example 5 | Comparative Example M | Comparative Example N | Comparative Example O |
|---|---|---|---|---|---|
| fosthiazate | 5 wt % | 5 wt % | 5 wt % | 5 wt % | 5 wt % |
| Butyl CARBITOL^{™} | 10 wt % | 10 wt % | 10 wt % | 10 w t% | 10 wt % |
| DOWFAX^{™} 2A1 | 2 wt % | 2 wt % | 2 wt % | 2 wt % | 2 wt % |
| ECOSURF^{™} EH-14 | 8 wt % | 8 wt % | 8 wt % | 8 wt % | 8 wt % |
| UCON^{™} OSP-18 | | 1 wt % | | | |
| POLYGLYCOL P-2000 | | | 1 wt % | | |
| DOWFAX^{™} DF-103 | | | | 1 wt % | |
| DOWFAX^{™} 25A414 | | | | | 1 wt % |
| water | to 100 % | to 100 % | to 100 % | to 100 % | to 100 % |
| Foam volume, ml | 65 | 15 | 40 | 45 | 45 |

The experimental results from the foaming tests performed in the above two ME formulations described in Table V indicate that the POBO-based UCON^{™} OSP-18 foam control agent (Example 5) exhibited better foam control effectiveness compared with the PO-based polyether foam control agent (Comparative Example M) and the EO/PO-based polyether foam control agent (Comparative Examples N and O).

The sample formulation of Example 5 was placed in an oven at 54 °C for one week. Almost no significant change of foam volume for the formulation of Example 5 was observed after the storage at the elevated temperature of 54 °C.

Based on the experimental results as described above, the present invention provides (1) a BO-containing polyether foam control agent which can be effective in water-based agrochemical formulations; (2) a BO-containing polyether foam control agent that performs as good or better than traditional EO/PO or PO based polyether foam control agents; and (3) a
BO-containing polyether foam control agent such as a POBO-based foam control agent that is compatible with high electrolyte active ingredients.

## Claims

1. An agrochemical formulation comprising:
(a) at least one polyether foam control agent comprising a butylene-containing polyether foam control agent having the following chemical formula:
R₁[O-(AO)ₐ-(BO)_{b}-R₂]_{c} Structure (I)
wherein R₁ is an alkyl backbone remnant from an alkyl alcohol initiator with carbon atoms of from 1 to 30; AO is a propylene oxide remnant after copolymerization; BO is a 1,2-butylene oxide remnant after polymerization; R₂ is either a hydrogen or a capping group, said capping group being an alkyl with carbon atoms of from 1 to 10, C(O)R or a benzyl group; R is alkyl carbon chain with carbon atoms of from 1 to 10; a is an average number of from zero to 30; b is an average number of greater than zero to 30; and c is a number selected from 1, 2 or 3 and corresponds to the number of hydroxyl groups on the alcohol initiator, wherein the ratio of propylene oxide to butylene oxide is 1:1 based on weight;
(b) at least one pesticide active; and
(c) water
wherein a concentration of the at least one polyether foam control agent is in a range of from 0.001 weight percent to 5 weight percent of the agrochemical formulation and a concentration of the at least one pesticide active is in the range of from 2 weight percent to 40 weight percent of the agrochemical formulation.

2. The formulation of claim 1, wherein the concentration of the BO in the polyether is greater than 20 weight percent.

3. The formulation of claim 1, wherein the concentration of the BO in the polyether is greater than 40 weight percent.

4. The formulation of claim 1, wherein the molecular weight of the BO-containing polyether foam control agent is from 300 to 2,000.

5. The formulation of claim 1, including (d) at least one additive selected from the group consisting of solvent, emulsifier, anti-freezing agent, thickener, microbiologic control agent, and mixtures thereof.

6. The formulation of claim 1, wherein the at least one pesticide active is a glyphosate, a glufosinate, or mixtures thereof.

7. The formulation of claim 1, wherein the concentration of the at least one polyether foam control agent is in the range of from 0.01 weight percent to 5 weight percent.

8. The formulation of claim 1, wherein the formulation is selected from the group consisting of a soluble liquid, a microemulsion, an emulsion-in water, and mixtures thereof.

9. A process for preparing an agrochemical formulation comprising admixing:
(a) at least one polyether foam control agent comprising a butylene-containing polyether foam control agent having the following chemical formula:
R₁[O-(AO)ₐ-(BO)_{b}-R₂]_{c} Structure (I)
wherein R₁ is an alkyl backbone remnant from an alkyl alcohol initiator with carbon atoms of from 1 to 30; AO is a propylene oxide remnant after copolymerization; BO is a 1,2-butylene oxide remnant after polymerization; R₂ is either a hydrogen or a capping group, said capping group being an alkyl with carbon atoms of from 1 to 10, C(O)R or a benzyl group; R is alkyl carbon chain with carbon atoms of from 1 to 10; a is an average number of from zero to 30; b is an average number of greater than zero to 30; and c is a number selected from 1, 2 or 3 and corresponds to the number of hydroxyl groups on the alcohol initiator, wherein the ratio of propylene oxide to butylene oxide is 1:1 based on weight;
(b) at least one pesticide active; and
(c) water,
wherein a concentration of the at least one polyether foam control agent is in a range of from 0.001 weight percent to 5 weight percent of the agrochemical formulation and a concentration of the at least one pesticide active is in the range of from 2 weight percent to 40 weight percent of the agrochemical formulation.

## Patentansprüche

1. Agrochemische Formulierung, umfassend:
(a) mindestens ein Polyetherschaumregulierungsmittel, umfassend ein butylenhaltiges Polyetherschaumregulierungsmittel, das die folgende chemische Formel aufweist:
R₁[O-(AO)ₐ-(BO)b-R₂]c Struktur (I)
wobei R₁ ein Alkylrückgratrest von einem Alkylalkoholinitiator mit Kohlenstoffatomen von 1 bis 30 ist; AO ein Propylenoxidrest nach einer Copolymerisation ist; BO ein 1,2-Butylenoxidrest nach einer Polymerisation ist; R₂ entweder ein Wasserstoff oder eine Capping-Gruppe ist, wobei die Capping-Gruppe ein Alkyl mit Kohlenstoffatomen von 1 bis 10, C(O)R oder eine Benzylgruppe ist; R eine Alkylkohlenstoffkette mit Kohlenstoffatomen von 1 bis 10 ist; a eine durchschnittliche Zahl von null bis 30 ist; b eine durchschnittliche Zahl größer als null bis 30 ist; und c eine Zahl ist, die aus 1, 2 oder 3 ausgewählt ist und der Anzahl von Hydroxylgruppen an dem Alkoholinitiator entspricht, wobei das Verhältnis von Propylenoxid zu Butylenoxid 1 : 1 basierend auf einem Gewicht ist;
(b) mindestens einen Pestizidwirkstoff; und
(c) Wasser
wobei eine Konzentration des mindestens einen Polyetherschaumregulierungsmittels in einem Bereich von 0,001 Gewichtsprozent bis 5 Gewichtsprozent der agrochemischen Formulierung liegt und eine Konzentration des mindestens einen Pestizidwirkstoffs in dem Bereich von 2 Gewichtsprozent bis 40 Gewichtsprozent der agrochemischen Formulierung liegt.

2. Formulierung nach Anspruch 1, wobei die Konzentration des BO in dem Polyether größer als 20 Gewichtsprozent ist.

3. Formulierung nach Anspruch 1, wobei die Konzentration des BO in dem Polyether größer als 40 Gewichtsprozent ist.

4. Formulierung nach Anspruch 1, wobei das Molekulargewicht des BOhaltigen Polyetherschaumregulierungsmittels 300 bis 2.000 ist.

5. Formulierung nach Anspruch 1, einschließlich (d) mindestens eines Additivs, das aus der Gruppe ausgewählt ist, bestehend aus Lösungsmittel, Emulgator, Frostschutzmittel, Verdickungsstoff, mikrobiologischem Regulierungsmittel und Mischungen davon.

6. Formulierung nach Anspruch 1, wobei der mindestens eine Pestizidwirkstoff ein Glyphosat, ein Glufosinat oder Mischungen davon ist.

7. Formulierung nach Anspruch 1, wobei die Konzentration des mindestens einen Polyetherschaumregulierungsmittels in dem Bereich von 0,01 Gewichtsprozent bis 5 Gewichtsprozent liegt.

8. Formulierung nach Anspruch 1, wobei die Formulierung aus der Gruppe ausgewählt ist, bestehend aus einer löslichen Flüssigkeit, einer Mikroemulsion, einer Emulsion in Wasser und Mischungen davon.

9. Verfahren zum Herstellen einer agrochemischen Formulierung, umfassend ein Beimischen:
(a) mindestens eines Polyetherschaumregulierungsmittels, umfassend ein butylenhaltiges Polyetherschaumregulierungsmittel, das die folgende chemische Formel aufweist:
R₁[O-(AO)ₐ-(BO)b-R₂]c Struktur (I)
wobei R₁ ein Alkylrückgratrest von einem Alkylalkoholinitiator mit Kohlenstoffatomen von 1 bis 30 ist; AO ein Propylenoxidrest nach einer Copolymerisation ist; BO ein 1,2-Butylenoxidrest nach einer Polymerisation ist; R₂ entweder ein Wasserstoff oder eine Capping-Gruppe ist, wobei die Capping-Gruppe ein Alkyl mit Kohlenstoffatomen von 1 bis 10, C(O)R oder eine Benzylgruppe ist; R eine Alkylkohlenstoffkette mit Kohlenstoffatomen von 1 bis 10 ist; a eine durchschnittliche Zahl von null bis 30 ist; b eine durchschnittliche Zahl größer als null bis 30 ist; und c eine Zahl ist, die aus 1, 2 oder 3 ausgewählt ist und der Anzahl von Hydroxylgruppen an dem Alkoholinitiator entspricht, wobei das Verhältnis von Propylenoxid zu Butylenoxid 1 : 1 basierend auf einem Gewicht ist;
(b) mindestens eines Pestizidwirkstoffs; und
(c) Wasser,
wobei eine Konzentration des mindestens einen Polyetherschaumregulierungsmittels in einem Bereich von 0,001 Gewichtsprozent bis 5 Gewichtsprozent der agrochemischen Formulierung liegt und eine Konzentration des mindestens einen Pestizidwirkstoffs in dem Bereich von 2 Gewichtsprozent bis 40 Gewichtsprozent der agrochemischen Formulierung liegt.

## Revendications

1. Formulation agrochimique comprenant :
(a) au moins un agent de régulation de mousse polyéther comprenant un agent de régulation de mousse polyéther contenant du butylène ayant la formule chimique suivante :
R₁[O-(AO)ₐ-(BO)b-R₂]c Structure (I)
R₁ étant un reste de squelette alkyle provenant d'un initiateur alcool alkylique avec des atomes de carbone allant de 1 à 30 ; AO étant un reste d'oxyde de propylène après copolymérisation ; BO étant un reste d'oxyde de 1,2-butylène après polymérisation ; R₂ étant soit un hydrogène soit un groupe coiffant, ledit groupe coiffant étant un alkyle avec des atomes de carbone allant de 1 à 10, C(O)R ou un groupe benzyle ; R étant une chaîne carbonée alkyle avec des atomes de carbone allant de 1 à 10 ; a étant un nombre moyen allant de zéro à 30 ; b étant un nombre moyen allant de plus de zéro à 30 ; et c étant un nombre choisi parmi 1, 2 ou 3 et correspondant au nombre de groupes hydroxyle sur l'initiateur alcool, le rapport de l'oxyde de propylène à l'oxyde de butylène étant de 1:1 en fonction du poids ;
(b) au moins un agent actif de pesticide ; et
(c) de l'eau
une concentration de l'au moins un agent de régulation de mousse polyéther étant dans une plage allant de 0,001 pour cent en poids à 5 pour cent en poids de la formulation agrochimique et une concentration de l'au moins un agent actif de pesticide étant dans la plage allant de 2 pour cent en poids à 40 pour cent en poids de la formulation agrochimique.

2. Formulation selon la revendication 1, dans laquelle la concentration du BO dans le polyéther est supérieure à 20 pour cent en poids.

3. Formulation selon la revendication 1, dans laquelle la concentration du BO dans le polyéther est supérieure à 40 pour cent en poids.

4. Formulation selon la revendication 1, dans laquelle la masse moléculaire de l'agent de régulation de mousse polyéther contenant du BO va de 300 à 2000.

5. Formulation selon la revendication 1, comportant (d) au moins un additif choisi dans le groupe constitué par solvant, émulsifiant, agent antigel, épaississant, agent de régulation microbiologique, et mélanges de ceux-ci.

6. Formulation selon la revendication 1, dans laquelle l'au moins un agent actif de pesticide est un glyphosate, un glufosinate, ou des mélanges de ceux-ci.

7. Formulation selon la revendication 1, dans laquelle la concentration de l'au moins un agent de régulation de mousse polyéther est dans la plage allant de 0,01 pour cent en poids à 5 pour cent en poids.

8. Formulation selon la revendication 1, la formulation étant choisie dans le groupe constitué par un liquide soluble, une micro-émulsion, une émulsion dans de l'eau, et mélanges de ceux-ci.

9. Procédé permettant de préparer une formulation agrochimique comprenant le fait de mélanger :
(a) au moins un agent de régulation de mousse polyéther comprenant un agent de régulation de mousse polyéther contenant du butylène ayant la formule chimique suivante :
R₁[O-(AO)ₐ-(BO)b-R₂]c Structure (I)
R₁ étant un reste de squelette alkyle provenant d'un initiateur alcool alkylique avec des atomes de carbone allant de 1 à 30 ; AO étant un reste d'oxyde de propylène après copolymérisation ; BO étant un reste d'oxyde de 1,2-butylène après polymérisation ; R₂ étant soit un hydrogène soit un groupe coiffant, ledit groupe coiffant étant un alkyle avec des atomes de carbone allant de 1 à 10, C(O)R ou un groupe benzyle ; R étant une chaîne carbonée alkyle avec des atomes de carbone allant de 1 à 10 ; a étant un nombre moyen allant de zéro à 30 ; b étant un nombre moyen allant de plus de zéro à 30 ; et c étant un nombre choisi parmi 1, 2 ou 3 et correspondant au nombre de groupes hydroxyle sur l'initiateur alcool, le rapport de l'oxyde de propylène à l'oxyde de butylène étant de 1:1 en fonction du poids ;
(b) au moins un agent actif de pesticide ; et
(c) de l'eau,
une concentration de l'au moins un agent de régulation de mousse polyéther étant dans une plage allant de 0,001 pour cent en poids à 5 pour cent en poids de la formulation agrochimique et une concentration de l'au moins un agent actif de pesticide étant dans la plage allant de 2 pour cent en poids à 40 pour cent en poids de la formulation agrochimique.
